# EUROPÄISCHE PATENTSCHRIFT

(11) **EP 4 306 362 B1**
(45) Veröffentlichungstag und Bekanntmachung des Hinweises auf die Patenterteilung: **15.10.2025**
(21) Anmeldenummer: 22185213.0
(22) Anmeldetag: 15.07.2022
(51) Int. Cl.: B60Q 1/00, B60Q 1/08

(54) **KRAFTFAHRZEUGLICHTSYSTEM**
MOTOR VEHICLE LIGHT SYSTEM
SYSTÈME D'ÉCLAIRAGE DE VÉHICULE AUTOMOBILE

(43) Veröffentlichungstag der Anmeldung: 17.01.2024
(73) Patentinhaber: ZKW Group GmbH, 3250 Wieselburg (AT)
(72) Erfinder: Zusser, Dominik, 3325 Ferschnitz (AT); Frank, Heimo, 3250 Wieselburg (AT); Gutenbrunner, Raphael, 3372 Blindenmarkt (AT)
(74) Vertreter: Patentanwaltskanzlei Matschnig & Forsthuber OG

(56) Entgegenhaltungen:
- EP-A2- 2 085 688
- WO-A1-02/04247
- DE-A1- 102015 008 729
- DE-A1- 102020 126 935
- US-A1- 2014 071 702

## Beschreibung

Die Erfindung betrifft ein Kraftfahrzeuglichtsystem umfassend zumindest zwei adaptive Kraftfahrzeugscheinwerfer, wobei ein adaptiver Kraftfahrzeugscheinwerfer ein Scheinwerfer ist, der zur Erzeugung einer Abblendlichtverteilung sowie einer adaptiven Fernlichtverteilung mit einer Auflösung von zumindest zwei, vorzugsweise zumindest sieben, einzeln ansteuerbaren Segmenten eingerichtet ist, wobei die Abblendlichtverteilung einen für die Verkehrsschilderbeleuchtung zugeordneten Bereich, nachfolgend Signlight-Bereich genannt, aufweist, der sich mit einem Abstrahlbereich, der der Fernlichtverteilung zugeordnet ist, zumindest teilweise überlappt, zumindest ein Kamerasystem zur Umfelderfassung des Kraftfahrzeuglichtsystems und zur Ausgabe hierzu korrespondierender Umfelddaten, indem das Kamerasystem zur Erfassung und relativen Positionsbestimmung von Verkehrsteilnehmern gemessen in Bezug auf die zumindest zwei adaptiven Kraftfahrzeugscheinwerfer eingerichtet ist, zumindest eine Steuerungseinheit, die mit dem Kamerasystem zum Empfang der Umfelddaten sowie mit den zumindest zwei adaptiven Kraftfahrzeugschweinwerfern zur Steuerung der adaptiven Kraftfahrzeugscheinwerfer verbunden ist, wobei die Steuerungseinheit dazu eingerichtet ist, die Umfelddaten durch Vergleich einer erfassten relativen Position eines Verkehrsteilnehmer mit einem ersten Positionsbereich, der von den Segmenten der adaptiven Fernlichtverteilung beleuchtbar ist, auf das Vorliegen einer Blendungsgefahr rückzuschließen und jene erfassten Verkehrsteilnehmer, die in dem besagten beleuchtbaren Positionsbereich liegen als auszublendende Verkehrsteilnehmer festzulegen, und im Falle des Vorhandensein auszublendender Verkehrsteilnehmer jedenfalls jene ansteuerbaren Segmente der Fernlichtverteilung zu deaktivieren, die ansonsten direkt auf den auszublendenden Verkehrsteilnehmer strahlen würden.

Solch blendfreie adaptive Beleuchtungssysteme sind aus dem Stand der Technik bekannt geworden (siehe das Dokument DE 102015008729 A).

Damit ist es möglich, jenen Lichtanteil, der durch das für die Abstrahlung der Fernlichtverteilung zuständigen Lichtmoduls zu reduzieren, der ansonsten eine Blendung des betreffenden Verkehrsteilnehmers verursachen würde. Typischerweise überlappen die Lichtverteilungen benachbarter Segmente einander zumindest teilweise, um so eine homogene Ausleuchtung zu ermöglichen und Übergänge zwischen den einzelnen Segmenten gleichmäßig auszuleuchten. Das bedeutet, dass in der Praxis häufig trotz einzelner Abschaltung betreffender Segmente dennoch eine Restlichtmenge in den auszublenden Bereich durch das Fernlichtmodul abgestrahlt wird.

In den meisten Europäischen Staaten werden durch den Gesetzgeber Grenzwerte für die Abstrahlung der einzelnen Lichtmodule in diversen Fahrszenarien vorgebegeben. Die Vorgaben betreffen die Lichtabstrahlung der einzelnen Lichtmodule. Jedes Lichtmodul wird für sich geprüft und muss den gesetzlichen Anforderungen genügen.

Bisher war es daher ausreichend, die Überlappung und die Lichtintensität der Beleuchtung der einzelnen Segmente so zu wählen, dass die gesetzlich erlaubte Restlichtmenge nicht überschritten wird. Wird durch andere Lichtmodule, die für andere Lichtfunktionen wie z.B. Signlight-Beleuchtung zuständig sind oder in diesen Bereich abstrahlen können, Licht abgestrahlt, so besteht das Risiko, dass die tatsächlich in dem auszublenden Bereich einfallende Lichtmenge dennoch eine relevante Intensität annimmt.

Eine Aufgabe der Erfindung besteht darin, die Wahrscheinlichkeit einer möglichen Blendung von Verkehrsteilnehmern weiter zu reduzieren.

Diese Aufgabe wird mit einem Kraftfahrzeuglichtsystem der eingangs genannten Art gelöst, bei welchem erfindungsgemäß die Steuerungseinheit weiters dazu eingerichtet ist, bei Vorliegen eines auszublendenden Verkehrsteilnehmers einen Vergleich seiner erfassten relativen Position mit einem zweiten Positionsbereich vorzunehmen, der durch den Signlight-Bereich beleuchtbar ist, und dadurch auf das Vorhandensein von auszublendenden Verkehrsteilnehmern innerhalb des zweiten Positionsbereichs rückzuschließen, wobei jeder adaptive Kraftfahrzeugscheinwerfer weiters mit einem Regelungsmittel versehen ist, wobei jedes Regelungsmittel dazu eingerichtet ist, die Intensität der Ausleuchtung des Signlight-Bereichs durch den jeweiligen adaptiven Kraftfahrzeugscheinwerfer abweichend von den Intensitäten der verbleibenden Bereiche der Abblendlichtverteilung zu regeln, wobei hierzu die Steuerungseinheit mit dem Regelungsmittel verbunden ist und das Regelungsmittel dergestalt angesteuert wird, dass im Falle der Erfassung des Vorhandenseins eines auszublendenden Verkehrsteilnehmers innerhalb des zweiten Positionsbereichs zudem die Intensität des in den Signlight-Bereich abgestrahlten Lichts im Vergleich zu einem Zustand, in dem kein auszublendender Verkehrsteilnehmer innerhalb des zweiten Positionsbereichs erfasst wird, reduziert wird.

Auf diese Weise wird die in den Signlight-Bereich einfallende Lichtmenge im Falle der Gefahr einer Blendung eines Verkehrsteilnehmers reduziert. Somit ist es möglich Lösungen anzubieten, die auch gesetzlichen Standards wie z.B. den Federal Motor Vehicle Safety Standards 108 in den USA, zuverlässig gerecht zu werden. Durch die Erfindung kann ein Lichtsystem geschaffen werden, dass die Überlagerung der Abstrahlung sämtlicher in einem Fahrzeug aktiven Lichtquellen berücksichtigt. Genauer gesagt kann z.B. beim blendfreien Fernlichtbetrieb nicht nur die Abstrahlung des Fernlichtmoduls, sondern sämtlicher Lichtmodule werden, die einen Beitrag zur Abstrahlung in den blendungsrelevanten Bereich, insbesondere in den sogenannten Signlight-Bereich, der zur Beleuchtung von Verkehrsschildern und Zeichen vorgesehen ist, leisten.

Das Kamerasystem kann beispielsweise eine optische Kamera umfassen. Der Signlight-Beriech wird z.B. auch als ZoneIII in der Regelung ECE_R149 bezeichnet. Er kann auch als ein Bereich beschrieben werden, der zumindest teilweise oberhalb der Helldunkel-Grenze einer Abblendlichtverteilung liegt und dafür vorgesehen ist, Verkehrsschilder zu beleuchten. In der bereits erwähnten in der USA vorgesehen Norm US FMVSS No108 wird hierfür auch der Begriff "OHS" verwendet. Die Segmente sind typischerweise in zumindest einer horizontalen Zeile angeordnet, auch können aber zwei oder mehr Zeilen vorgesehen sein, wobei die Segmente matrixartig nebeneinander, bei mehrzeiligen Ausführungen ebenso übereinander, angeordnet sind und eine Zeile z.B. zumindest sieben Spalten aufweisen kann.

Eine horizontale Auflösung mit zumindest 10 Leuchtsegmenten kann sinnvoll sein, wobei diese Auflösung z.B. durch Überlagerung der Abstrahlung der einzelnen Segmente des linken und rechten Scheinwerfers erzielt werden kann. So kann z.B. ein linker und ein rechter Scheinwerfer jeweils z.B. sieben Einzelsegmente aufweisen, die spiegel-asymmetrisch überlappen und in Summe z.B. 11 Segmente ergeben. Hochauflösende Systeme können eine Vielzahl von Segmenten aufweisen, sodass Auflösungen <0,1° (horizontal) möglich sind.

Erfindungsgemäß ist vorgesehen, dass die Reduktion der Intensität des in den Signlight-Bereich abgestrahlten Lichts im Vergleich zu einem Zustand, in dem kein auszublendender Verkehrsteilnehmer innerhalb des Signlight-Bereichs erfasst wird, zumindest 30% beträgt. Die Reduktion kann z.B. 50% oder mehr betragen.

Weiters kann vorgesehen sein, dass das Regelungsmittel als Stromregler jener Lichtquelle ausgebildet ist, die für die Abstrahlung des Signlight-Bereichs zuständig ist.

Insbesondere kann vorgesehen sein, dass das Regelungsmittel in Form einer PWM-Dimmung ausgebildet ist, die jener Lichtquelle zugeordnet ist, die für die Abstrahlung des Signlight-Bereichs zuständig ist.

Weiters kann vorgesehen sein, dass das Regelungsmittel als adaptiver Lichtfilter ausgebildet ist, dessen Lichtdurchlässigkeit variabel steuerbar ist, der, vorzugsweise ausschließlich, in dem Lichtpfad jener optischen Komponente angeordnet ist, die für die Abstrahlung in den Signlight-Bereich vorgesehen ist. Das Regelungsmittel kann dabei dazu eingerichtet sein, das den adaptiven Lichtfilter passierende Licht in Abhängigkeit von den Umfelddaten zu absorbieren.

Insbesondere kann vorgesehen sein, dass je adaptiven Scheinwerfer zumindest eine Lichtquelle vorgesehen ist, die ausschließlich zur Abstrahlung in den Signlight-Bereich eingerichtet ist. Das bedeutet, dass es sich dabei um ein eigenständiges Modul handelt, das nur für die Abstrahlung von Signlight zuständig ist, und ansonsten nicht zu dem Abblendlicht beiträgt. Ein solches Modul kann auch als "standalone" Modul bezeichnet werden.

Auch kann das Signlight über ein bi-funktionales Reflektorkonzept realisiert sein, z.B. mittels eines Paraboloid-Reflektors, wobei die Lichtquelle, insbesondere eine LED-Lichtquelle, für die Abblendlichtverteilung (mit Ausnahme des Signlight-Anteils) im Fokus des Reflektors sitzt und abseits des Fokuspunktes eine Zusatzlichtquelle extra für Signlight vorgesehen ist und entsprechend positioniert und einzeln ansteuerbar ist.

Auch kann es vorgesehen sein, dass die Signlight-Abstrahlung für sich genommen segmentiert ist und wiederum nur blendungsrelevante Bereiche der Signlight-Abstrahlung deaktiviert werden. Hierzu kann z.B. ein segmentierter Filter und/oder eine Anordnung umfassend zwei oder mehr Lichtquellen vorgesehen sein. Auch kann vorgesehen sein, dass eine Zusatzlichtquelle, insbesondere eine LED-Lichtquelle, mittels Matrixcontroller angesteuert wird: Ähnlich wie zuvor, nur, dass bestimmte Lichtquellen eines Pixel-Light-Moduls für das Signlight zuständig sind, und diese in üblicher Weise einzeln gesteuert werden.

Weiters kann vorgesehen sein, dass eine Erweiterung eines bestehenden Moduls über die Signlightumsetzung im Abblendlichtbetrieb über Dimmung einzelner Segmente sowie Anpassung dieser Dimmung im ADB Betrieb vorgesehen ist. Weiters kann eine Dimmung des gesamten Moduls vorgesehen sein, welches die Signlight-Abstrahlung integriert hat. Hierzu kann wiederum eine Stromregelung und/oder PWM-Regelung und/oder ein Filter vorgesehen sein.

Weiters kann vorgesehen sein, dass zur Abstrahlung in den Signlight-Bereich eine Signallichtvorrichtung vorgesehen ist, wobei es sich bei der Signallichtvorrichtung vorzugsweise um ein Tagfahrlichtmodul, ein Parklichtmodul, ein Positionslichtmodul, ein Begrenzungslichtmodul, ein Ambientelichtmodul und/oder ein Designlichtmodul handelt, wobei jeder Signallichtvorrichtung jeweils ein Regelungsmittel zugeordnet ist.

Unter Signallichtvorrichtung werden alle Lichtmodule verstanden, die vorgesehen sind, um durch Abstrahlung von Licht die Sichtbarkeit für Dritte zu erhöhen.

Insbesondere kann vorgesehen sein, dass sämtlichen zur Abstrahlung von Licht vorgesehen Lichtquellen und/oder Lichtmodule des Kraftfahrzeuglichtsystem, die zumindest teilweise zur Abstrahlung in den Signlight-Bereich eingerichtet sind, ein Regelungsmittel, insbesondere je ein Regelungsmittel, zugeordnet ist.

Die Erfindung betrifft weiters ein Kraftfahrzeug umfassend ein erfindungsgemäßes Kraftfahrzeuglichtsystem.

Die Erfindung ist im Folgenden anhand einer beispielhaften und nicht einschränkenden Ausführungsform näher erläutert, die in den Figuren veranschaulicht ist. Darin zeigt
Figur 1 eine schematische Darstellung eines erfindungsgemäßen Kraftfahrzeuglichtsystems,
Figur 2 eine schematische Darstellung eines adaptiven Kraftfahrzeugscheinwerfers,
Figur 3 eine schematische Darstellung einer Signlight-Lichtverteilung in der Umgebung von Verkehrsteilnehmern,
Figur 4 eine schematische Darstellung von einzelnen ansteuerbaren Segmenten einer adaptiven Fernlichtverteilung,
Figur 5 eine schematische Darstellung adaptiven Fernlichtverteilung mit einem Ausblendszenario,
Figur 6 eine schematische Darstellung jener Beleuchtungsbereiche einer adaptiven Fernlichtverteilung während einer speziellen Verkehrssituation eines entgegenkommenden Fahrzeuges mit 30m Abstand
Figur 7a eine schematische Darstellung einer ersten Art der Regelung der Intensität der Signlight-Abstrahlung,
Figur 7b eine schematische Darstellung einer zweiten Art der Regelung der Intensität der Signlight-Abstrahlung,
Figur 8 eine schematische Darstellung eines Kraftfahrzeugs umfassend ein erfindungsgemäßes Kraftfahrzeuglichtsystem.

In den folgenden Figuren bezeichnen - sofern nicht anders angegeben - gleiche Bezugszeichen gleiche Merkmale.

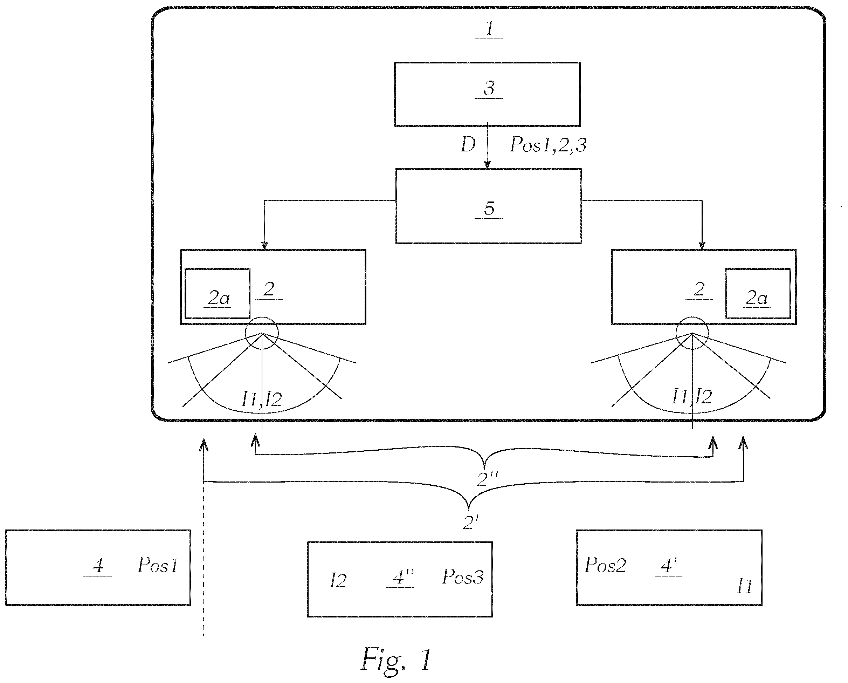

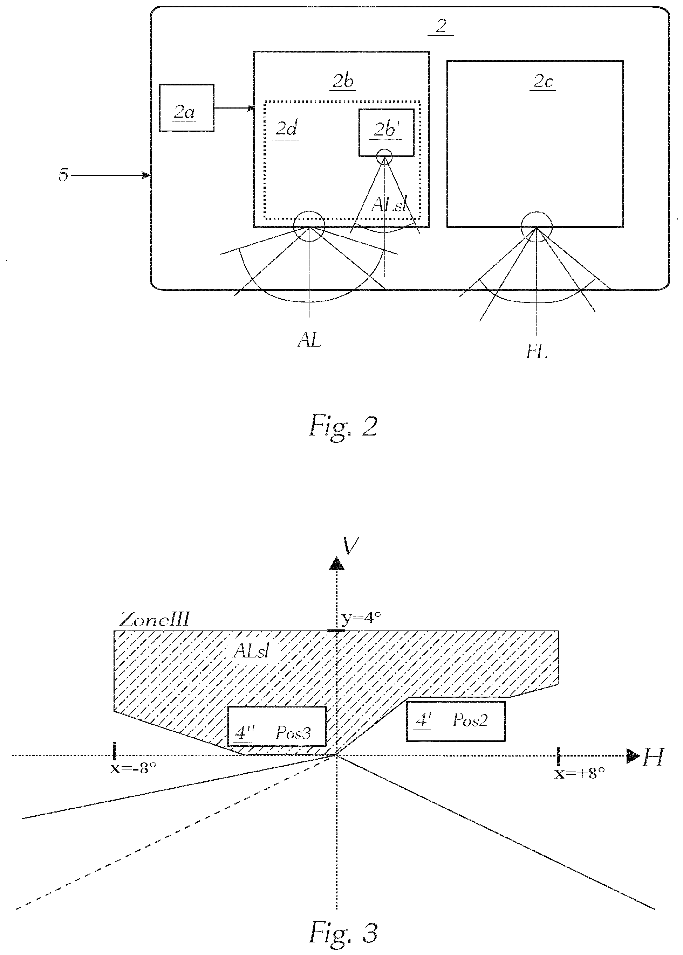

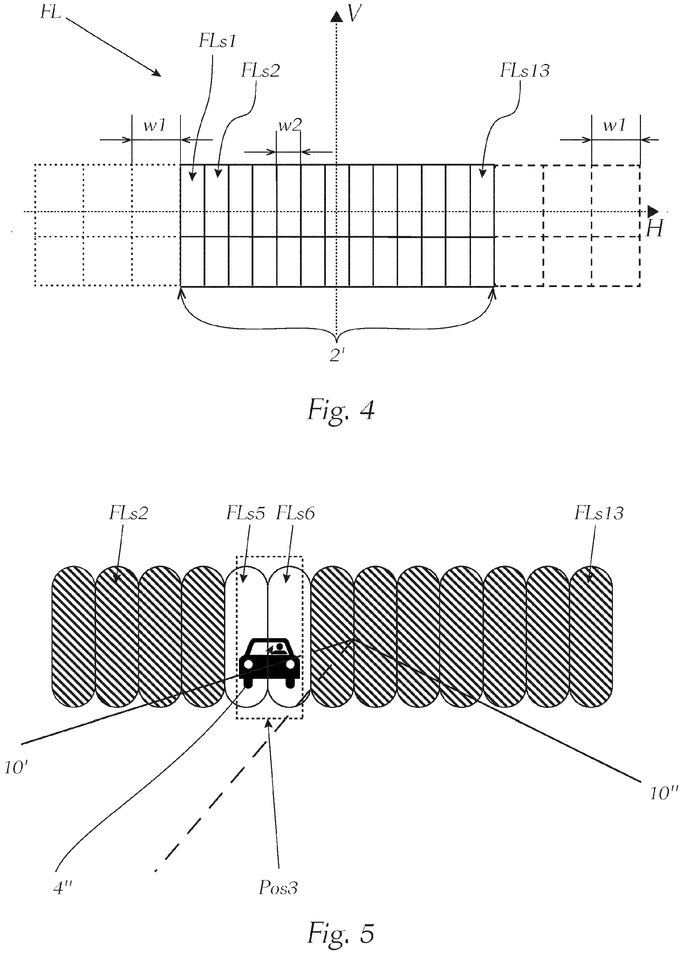

Figur 1 zeigt eine schematische Darstellung eines erfindungsgemäßen Kraftfahrzeuglichtsystems 1. Das Kraftfahrzeuglichtsystem 1 umfasst zumindest zwei adaptive Kraftfahrzeugscheinwerfer 2. Ein adaptiver Kraftfahrzeugscheinwerfer 2 ist ein Scheinwerfer, der zur Erzeugung einer Abblendlichtverteilung AL (siehe Fig. 2) sowie einer adaptiven Fernlichtverteilung FL (siehe Fig. 2) mit einer Auflösung von zumindest zwei, vorzugsweise zumindest sieben, einzeln ansteuerbaren Segmenten FLs1, FLs2, FLs13 (siehe Fig. 4) eingerichtet ist, wobei die Abblendlichtverteilung AL einen für die Verkehrsschilderbeleuchtung zugeordneten Bereich, nachfolgend Signlight-Bereich ALsl (siehe Fig. 2) genannt, aufweist, der sich mit einem Abstrahlbereich, der der Fernlichtverteilung FL zugeordnet ist, zumindest teilweise überlappt.

Weiters weist das Kraftfahrzeuglichtsystem 1 zumindest ein Kamerasystem 3 zur Umfelderfassung des Kraftfahrzeuglichtsystems 1 und zur Ausgabe hierzu korrespondierender Umfelddaten D auf. Die Umfelderfassung erfolgt, indem das Kamerasystem 3 zur Erfassung und relativen Positionsbestimmung Pos1, Pos2, Pos3 von Verkehrsteilnehmern 4, 4', 4" gemessen in Bezug auf die zumindest zwei adaptiven Kraftfahrzeugscheinwerfer 2 eingerichtet ist.

Zudem weist das Kraftfahrzeuglichtsystem 1 zumindest eine Steuerungseinheit 5 auf, die mit dem Kamerasystem 3 zum Empfang der Umfelddaten D sowie mit den zumindest zwei adaptiven Kraftfahrzeugschweinwerfern 2 zur Steuerung der adaptiven Kraftfahrzeugscheinwerfer 2 verbunden ist, wobei die Steuerungseinheit 5 dazu eingerichtet ist, die Umfelddaten D durch Vergleich einer erfassten relativen Position Pos eines Verkehrsteilnehmer 4 mit einem ersten Positionsbereich 2', der von den Segmenten FLs1, FLs2, FLs13 der adaptiven Fernlichtverteilung FL beleuchtbar ist, auf das Vorliegen einer Blendungsgefahr rückzuschließen und jene erfassten Verkehrsteilnehmer 4', 4", die in dem besagten beleuchtbaren Positionsbereich 2' liegen als auszublendende Verkehrsteilnehmer festzulegen, und im Falle des Vorhandensein auszublendender Verkehrsteilnehmer 4 jedenfalls jene ansteuerbaren Segmente FLs1, FLs2, FLs13 der Fernlichtverteilung FL zu deaktivieren, die ansonsten direkt auf den auszublendenden Verkehrsteilnehmer 4 strahlen würden. In dem in Fig. 1 gezeigten Beispiel liegt der Verkehrsteilnehmer 4 gemäß Position Pos 1 außerhalb des ersten Positionsbereichs 2' (z.B. weit seitlich von dem lichtabstrahlenden System 1) und muss daher nicht ausgeblendet werden - typischerweise, weil die normale Fernlichtverteilung in dieser Konstellation gar keine Blendung verursacht. Ein weiterer Verkehrsteilnehmer 4' liegt hingegen gemäß Position Pos 2 innerhalb des ersten Positionsbereichs 2' und ist daher auszublenden. Ein dritter Verkehrsteilnehmer 4" liegt ebenso gemäß Pos 3 innerhalb des ersten Positionsbereichs 2' und ist daher auszublenden.

Die Steuerungseinheit 5 ist weiters dazu eingerichtet ist, bei Vorliegen eines auszublendenden Verkehrsteilnehmers 4' und 4" einen Vergleich der erfassten relativen Position Pos mit einem zweiten Positionsbereich 2" vorzunehmen, der durch den Signlight-Bereich ALsl beleuchtbar ist, und dadurch auf das Vorhandensein von auszublendenden Verkehrsteilnehmern 4 innerhalb des zweiten Positionsbereichs 2" rückzuschließen. Jeder adaptive Kraftfahrzeugscheinwerfer 2 ist weiters mit einem Regelungsmittel 2a versehen, wobei jedes Regelungsmittel 2a dazu eingerichtet ist, die Intensität der Ausleuchtung des Signlight-Bereichs ALsl durch den jeweiligen adaptiven Kraftfahrzeugscheinwerfer 2 abweichend von den Intensitäten der verbleibenden Bereiche der Abblendlichtverteilung AL zu regeln. Hierzu ist die Steuerungseinheit 5 mit dem Regelungsmittel 2a verbunden und das Regelungsmittel 2a wird dergestalt angesteuert, dass im Falle der Erfassung des Vorhandenseins eines auszublendenden Verkehrsteilnehmers 4" innerhalb des zweiten Positionsbereichs 2" zudem die Intensität des in den Signlight-Bereich ALsl abgestrahlten Lichts im Vergleich zu einem Zustand, in dem kein auszublendender Verkehrsteilnehmer 4 innerhalb des zweiten Positionsbereichs 2" erfasst wird, reduziert wird, d.h. eine ansonsten vorgesehene Lichtintensität I1 wird zu einer geringeren Lichtintensität I2 reduziert. Die Lichtintensitäten I1 und I2 beschreiben dabei eine absolute Lichtintensität, die durch Überlagerung der gesamten von Lichtquellen in den Signlight-bereich abgestrahlten Lichtmenge entsteht. Im Falle der beschriebenen Ausblendung wird diese von I1 auf I2 reduziert. Diese Größen haben daher nur indirekt mit der Lichtintensität der Fernlichtverteilung FL und der Abblendlichtverteilung AL zu tun.

Die Reduktion der Intensität I2 des in den Signlight-Bereich ALsl abgestrahlten Lichts im Vergleich zu einem Zustand, in dem kein auszublendender Verkehrsteilnehmer 4 innerhalb des Signlight-Bereichs ALsl erfasst wird I1, beträgt zumindest 30%, kann aber auch zumindest 50%, 80% oder sogar 100% betragen.

Figur 2 zeigt eine schematische Darstellung eines adaptiven Kraftfahrzeugscheinwerfers 2. Dieser umfasst ein Lichtmodul 2b, das zur Abstrahlung der Abblendlichtverteilung AL eingerichtet ist, das zudem eine Lichtquelle 2b' aufweisen kann, die ausschließlich zur Abstrahlung in einen Signlight-Bereich ALsl zuständig ist. Zudem kann ein zusätzliches Lichtmodul 2c vorgesehen sein, dass ausschließlich zur Abstrahlung der segmentierten Fernlichtverteilung FL vorgesehen ist, die adaptiv ausgebildet ist.

Figur 3 zeigt eine schematische Darstellung einer Signlight-Lichtverteilung in der Umgebung von Verkehrsteilnehmern 4, nämlich der zuvor in Fig. 1 gezeigten Verkehrsteilnehmer 4' und 4". Die Signlichtverteilung erstreckt sich typischerweise über einen vorgegebenen Winkelbereich, wobei der Wert x z.B. +/-8 Grad {8°Links bis 8°Rechts} und der Wert y z.B. 4 Grad {0°=Horizont bis 4°Up} beträgt. Darin ist erkennbar, dass der Verkehrsteilnehmer 4" an Pos3 innerhalb der Signlightverteilung, die auch als Zone III bezeichnet wird, und den zweiten Positionsbereich 2" darstellt, liegt, und der Verkehrsteilnehmer 4' an Pos2 hingegen außerhalb des zweiten Positionsbereichs 2" liegt.

Figur 4 zeigt eine schematische Darstellung von einzelnen ansteuerbaren Segmenten FLs1, FLs2, FLs13 einer adaptiven Fernlichtverteilung FL. Die Segmente wurden darin beispielhaft dargestellt und bezeichnet. Deren Anzahl, Anordnung und Größe kann je nach Anwendungsfall variieren. Sie können auch unterschiedliche Weiten w1 und w2, und zwar sowohl in horizontaler als auch in vertikaler Richtung aufweisen.

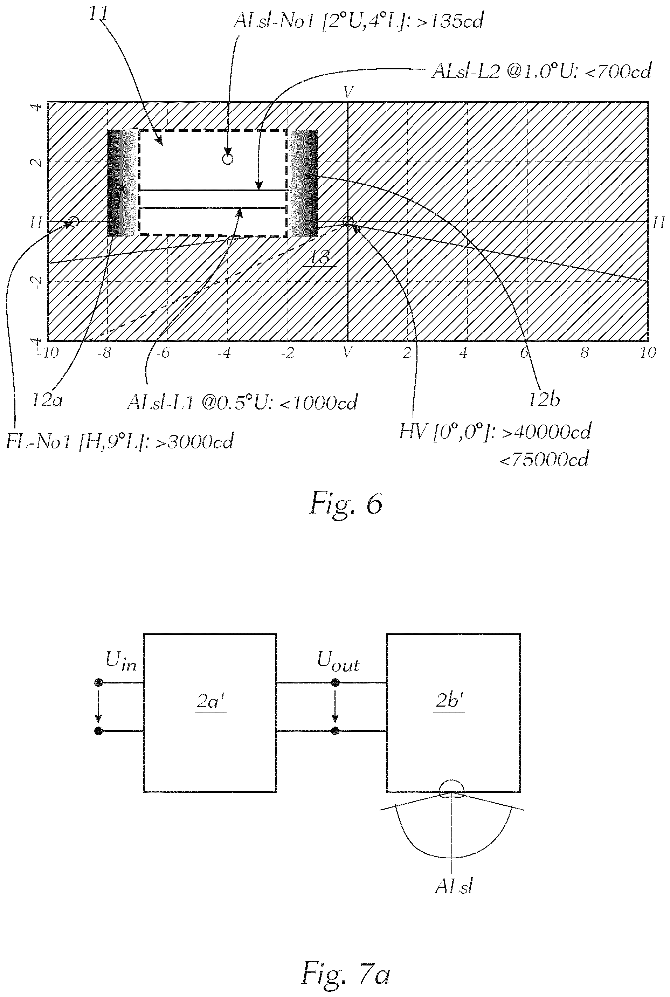

Figur 5 zeigt schematisch ein Ausblendszenario mit den Fahrbahnstreifen 10' (links) und 10" (rechts), wobei die Pos3 eines entgegenkommenden Verkehrsteilnehmers 4" durch Deaktivierung der Leucht-Segmente FLs5 und FLs6 ausgeblendet wird und dieser Verkehrsteilnehmer 4" keine Blendung erfährt. Dieser Bereich im Verkehrsraum gilt als "area of reduced intensity" (Fig.6), innerhalb dessen die Vorgaben zu minimalen und maximalen Lichtstärken einer Abblendlichtverteilung, z.B. »lower beam pattern« LB2V laut Federal Motor Vehicle Safety Standards 108 in den USA, durch die Erfindung zuverlässig eingehalten werden können.

Figur 6 beschreibt für eine bestimmte Fahrsituation (entgegenkommendes Fahrzeug in 30m Abstand) beispielhaft die "area of reduced intensity" 11 in einem Rechteck mit der horizontalen Ausdehnung von 7,0°L bis 2,0°L und der vertikalen Ausdehnung von 0,4°D bis 3,0°U. Im Meßpunkt ALsl-No1 [2°U,4°L], korrespondierend mit S100LL in ZoneIII, soll in diesem Beispiel eine minimale Lichtstärke >135cd vorhanden sein; gleichzeitig soll entlang der horizontal-verlaufenden Meßlinie ALsl-L1 bei 0,5°U eine Lichtstärke von maximalen 1000cd bzw. entlang der horizontal-verlaufenden Meßlinie ALsl-L2 bei 1,0°U eine Lichtstärke von maximalen 700cd nicht überschritten werden. Daran anschließend sind "transition zone" 12a und 12b angeordnet, die jeweils eine Ausdehnung von ≤1,0° aufweisen soll und in denen die maximale Lichtstärke 75000cd betragen soll. Außerhalb dieser Zone liegt der Bereich "area of unreduced intensity" 13, in dem die Vorgaben für eine Fernlichtverteilung, z.B. »upper beam pattern« UB2 laut Federal Motor Vehicle Safety Standards 108 in den USA, zuverlässig eingehalten werden sollen. Beispielhaft sind im Meßpunkt HV Lichtstärken >40000cd und <75000cd vorgeschrieben, im Meßpunkt FL-No1 [H,9°L] mehr als 3000cd. Zu beachten sind ebenso die sich überlagernden Bereiche der Signlight-Bereich ALsl und der Area-of-reduced-Intensity.

In Fig. 2 ist zudem beispielhaft dargestellt, dass je adaptiven Scheinwerfer 2 zumindest eine Lichtquelle 2b' vorgesehen ist, die ausschließlich zur Abstrahlung in den Signlight-Bereich ALsl eingerichtet ist.

Weiters kann vorgesehen sein, dass zur Abstrahlung in den Signlight-Bereich ALsl eine Signallichtvorrichtung 2d vorgesehen ist, wobei es sich bei der Signallichtvorrichtung vorzugsweise um ein Tagfahrlichtmodul, ein Parklichtmodul, ein Positionslichtmodul, ein Begrenzungslichtmodul, ein Ambientelichtmodul und/oder ein Designlichtmodul handelt, wobei jeder Signallichtvorrichtung 2d jeweils ein Regelungsmittel 2a zugeordnet ist.

Insbesondere kann vorgesehen sein, dass sämtlichen zur Abstrahlung von Licht vorgesehen Lichtquellen und/oder Lichtmodule des Kraftfahrzeuglichtsystem 1, die zumindest teilweise zur Abstrahlung in den Signlight-Bereich Als1 eingerichtet sind, ein Regelungsmittel 2a zugeordnet ist.

Figur 7a zeigt eine schematische Darstellung einer ersten Art der Regelung der Intensität der Signlight-Abstrahlung, bei der das Regelungsmittel 2a als Stromregler 2a' jener Lichtquelle 2b' des Signlight-Scheinwerfers 2b ausgebildet ist, die für die Abstrahlung des Signlight-Bereichs ALsl zuständig ist. Auch kann vorgesehen sein, dass das Regelungsmittel 2a in Form einer PWM-Dimmung ausgebildet ist, die jener Lichtquelle 2b' zugeordnet ist, die für die Abstrahlung des Signlight-Bereichs ALsl zuständig ist.

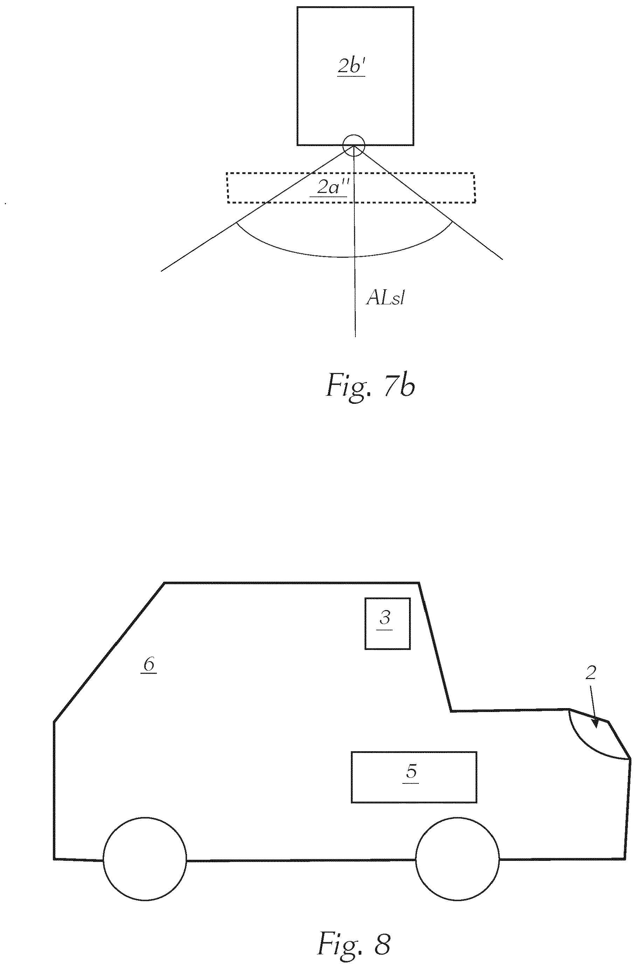

Figur 7b eine schematische Darstellung einer zweiten Art der Regelung der Intensität der Signlight-Abstrahlung, bei der das Regelungsmittel 2a als adaptiver Lichtfilter 2a" ausgebildet ist, dessen Lichtdurchlässigkeit variabel steuerbar ist, der, vorzugsweise ausschließlich, in dem Lichtpfad jener optischen Komponente 2b' angeordnet ist, die für die Abstrahlung in den Signlight-Bereich ALsl vorgesehen ist.

Figur 8 zeigt eine schematische Darstellung eines Kraftfahrzeugs 6 umfassend ein erfindungsgemäßes Kraftfahrzeuglichtsystem 1.

Die Erfindung ist nicht auf die gezeigten Ausführungsformen beschränkt, sondern durch den gesamten Schutzumfang der Ansprüche definiert. Auch können einzelne Aspekte der Erfindung bzw. der Ausführungsformen aufgegriffen und miteinander kombiniert werden. Etwaige Bezugszeichen in den Ansprüchen sind beispielhaft und dienen nur der einfacheren Lesbarkeit der Ansprüche, ohne diese einzuschränken.

## Patentansprüche

1. Kraftfahrzeuglichtsystem (1) umfassend
- zumindest zwei adaptive Kraftfahrzeugscheinwerfer (2), wobei ein adaptiver Kraftfahrzeugscheinwerfer (2) ein Scheinwerfer ist, der zur Erzeugung einer Abblendlichtverteilung (AL) sowie einer adaptiven Fernlichtverteilung (FL) mit einer Auflösung von zumindest zwei, vorzugsweise zumindest sieben, einzeln ansteuerbaren Segmenten (FLs1, FLs2, FLs13) eingerichtet ist, wobei die Abblendlichtverteilung (AL) einen für die Verkehrsschilderbeleuchtung zugeordneten Bereich, nachfolgend Signlight-Bereich (ALsl) genannt, aufweist, der sich mit einem Abstrahlbereich, der der Fernlichtverteilung (FL) zugeordnet ist, zumindest teilweise überlappt,
- zumindest ein Kamerasystem (3) zur Umfelderfassung des Kraftfahrzeuglichtsystems (1) und zur Ausgabe hierzu korrespondierender Umfelddaten (D), indem das Kamerasystem (3) zur Erfassung und relativen Positionsbestimmung (Pos1, Pos2, Pos3) von Verkehrsteilnehmern (4', 4', 4") gemessen in Bezug auf die zumindest zwei adaptiven Kraftfahrzeugscheinwerfer (2) eingerichtet ist,
- zumindest eine Steuerungseinheit (5), die mit dem Kamerasystem (3) zum Empfang der Umfelddaten (D) sowie mit den zumindest zwei adaptiven Kraftfahrzeugschweinwerfern (2) zur Steuerung der adaptiven Kraftfahrzeugscheinwerfer (2) verbunden ist, wobei die Steuerungseinheit (5) dazu eingerichtet ist, die Umfelddaten (D) durch Vergleich einer erfassten relativen Position (Pos) eines Verkehrsteilnehmer (4) mit einem ersten Positionsbereich (2'), der von den Segmenten (FLs1, FLs2, FLs13) der adaptiven Fernlichtverteilung (FL) beleuchtbar ist, auf das Vorliegen einer Blendungsgefahr rückzuschließen und jene erfassten Verkehrsteilnehmer (4', 4"), die in dem besagten beleuchtbaren Positionsbereich (2') liegen als auszublendende Verkehrsteilnehmer (4', 4") festzulegen, und im Falle des Vorhandensein auszublendender Verkehrsteilnehmer (4) jedenfalls jene ansteuerbaren Segmente (FLs1, FLs2, FLs13) der Fernlichtverteilung (FL) zu deaktivieren, die ansonsten direkt auf den auszublendenden Verkehrsteilnehmer (4) strahlen würden,
**dadurch gekennzeichnet, dass**
die Steuerungseinheit (5) weiters dazu eingerichtet ist, bei Vorliegen eines auszublendenden Verkehrsteilnehmers (4', 4") einen Vergleich seiner erfassten relativen Position (Pos) mit einem zweiten Positionsbereich (2") vorzunehmen, der durch den Signlight-Bereich (ALsl) beleuchtbar ist, und dadurch auf das Vorhandensein von auszublendenden Verkehrsteilnehmern (4) innerhalb des zweiten Positionsbereichs (2") rückzuschließen, wobei jeder adaptive Kraftfahrzeugscheinwerfer (2) weiters mit einem Regelungsmittel (2a) versehen ist, wobei jedes Regelungsmittel (2a) dazu eingerichtet ist, die Intensität der Ausleuchtung des Signlight-Bereichs (ALsl) durch den jeweiligen adaptiven Kraftfahrzeugscheinwerfer (2) abweichend von den Intensitäten der verbleibenden Bereiche der Abblendlichtverteilung (AL) zu regeln, wobei hierzu die Steuerungseinheit (5) mit dem Regelungsmittel (2a) verbunden ist und das Regelungsmittel (2a) dergestalt angesteuert wird, dass im Falle der Erfassung des Vorhandenseins eines auszublendenden Verkehrsteilnehmers (4") innerhalb des zweiten Positionsbereichs (2") zudem die Intensität des in den Signlight-Bereich (ALsl) abgestrahlten Lichts (I2) im Vergleich zu einem Zustand, in dem kein auszublendender Verkehrsteilnehmer (4) innerhalb des zweiten Positionsbereichs (2") erfasst wird (I1), reduziert wird, wobei die Reduktion der Intensität (I2) des in den Signlight-Bereich (ALsl) abgestrahlten Lichts im Vergleich zu einem Zustand, in dem kein auszublendender Verkehrsteilnehmer (4) innerhalb des Signlight-Bereichs (ALsl) erfasst wird (I1), zumindest 30% beträgt.

2. Kraftfahrzeuglichtsystem (1) nach einem der vorhergehenden Ansprüche, wobei das Regelungsmittel (2a) als Stromregler (2a') jener Lichtquelle (2b') ausgebildet ist, die für die Abstrahlung des Signlight-Bereichs (ALsl) zuständig ist.

3. Kraftfahrzeuglichtsystem (1) nach einem der vorhergehenden Ansprüche, wobei das Regelungsmittel (2a) in Form einer PWM-Dimmung ausgebildet ist, die jener Lichtquelle (2b') zugeordnet ist, die für die Abstrahlung des Signlight-Bereichs (ALsl) zuständig ist.

4. Kraftfahrzeuglichtsystem (1) nach Anspruch 1, wobei das Regelungsmittel (2a) als adaptiver Lichtfilter (2a") ausgebildet ist, dessen Lichtdurchlässigkeit variabel steuerbar ist, der, vorzugsweise ausschließlich, in dem Lichtpfad jener optischen Komponente (2b') angeordnet ist, die für die Abstrahlung in den Signlight-Bereich (ALsl) vorgesehen ist.

5. Kraftfahrzeuglichtsystem (1) nach einem der vorhergehenden Ansprüche, wobei je adaptiven Scheinwerfer (2) zumindest eine Lichtquelle (2b') vorgesehen ist, die ausschließlich zur Abstrahlung in den Signlight-Bereich (ALsl) eingerichtet ist.

6. Kraftfahrzeuglichtsystem (1) nach einem der vorhergehenden Ansprüche, wobei zur Abstrahlung in den Signlight-Bereich (ALsl) eine Signallichtvorrichtung (2d) vorgesehen ist, wobei es sich bei der Signallichtvorrichtung (2d) vorzugsweise um ein Tagfahrlichtmodul, ein Parklichtmodul, ein Positionslichtmodul, ein Begrenzungslichtmodul, ein Ambientelichtmodul und/oder ein Designlichtmodul handelt, wobei jeder Signallichtvorrichtung jeweils ein Regelungsmittel (2a) zugeordnet ist.

7. Kraftfahrzeuglichtsystem (1) nach einem der vorhergehenden Ansprüche, wobei sämtlichen zur Abstrahlung von Licht vorgesehen Lichtquellen und/oder Lichtmodule des Kraftfahrzeuglichtsystem (1), die zumindest teilweise zur Abstrahlung in den Signlight-Bereich (Als1) eingerichtet sind, ein Regelungsmittel (2a) zugeordnet ist.

8. Kraftfahrzeug (6), umfassend ein Kraftfahrzeuglichtsystem (1) nach einem der vorhergehenden Ansprüche.

## Claims

1. Motor vehicle lighting system (1) comprising
- at least two adaptive motor vehicle headlights (2), wherein an adaptive motor vehicle headlight (2) is a headlight which is designed to generate a low beam distribution (AL) and an adaptive high beam distribution (FL) with a resolution of at least two, preferably at least seven, individually controllable segments (FLs1, FLs2, FLs13), wherein the low beam distribution (AL) has an area assigned for traffic sign illumination, hereinafter referred to as the sign light area (ALsI), which at least partially overlaps with a radiation area assigned to the high beam distribution (FL),
- at least one camera system (3) for detecting the surroundings of the motor vehicle lighting system (1) and for outputting corresponding environment data (D), wherein the camera system (3) is set up to detect and determine the relative position (Pos1, Pos2, Pos3) of road users (4', 4', 4") measured in relation to the at least two adaptive motor vehicle headlights (2),
- at least one control unit (5) connected to the camera system (3) for receiving the environment data (D) and to the at least two adaptive motor vehicle headlights (2) for controlling the adaptive motor vehicle headlights (2), wherein the control unit (5) is designed to compare the environment data (D) with the detected relative position (Pos) of a road user (4) with a first position range (2') that can be illuminated by the segments (FLs1, FLs2, FLs13) of the adaptive high-beam distribution (FL), and to determine those detected road users (4', 4") located in said illuminable position range (2') as road users (4', 4") to be masked, and in the event of the presence of road users (4) to be masked, in any case to deactivate those controllable segments (FLs1, FLs2, FLs13) of the high beam distribution (FL) that would otherwise shine directly on the traffic participant (4) to be hidden,
**characterized in that**
the control unit (5) is further designed to compare, in the presence of a traffic participant (4', 4'') is present, to compare its detected relative position (Pos) with a second position range (2") that can be illuminated by the signal light area (ALsl), and thereby to infer the presence of road users (4) to be hidden within the second position range (2"), wherein each adaptive motor vehicle headlight (2) is further provided with a control means (2a), wherein each adaptive motor vehicle headlight (2) is further provided with a control means (2a), wherein each control means (2a) is designed to control the intensity of the illumination of the signal light area (ALsl) by the respective adaptive motor vehicle headlight (2) to be different from the intensities of the remaining areas of the low beam distribution (AL), wherein for this purpose the control unit (5) is connected to the control means (2a) and the control means (2a) is controlled in such a way that, in the event of the presence of a road user (4") to be masked being detected within the second position area (2"), the intensity of the light (I2) emitted into the signal light area (ALsl) is also reduced compared to a state in which no road user (4) to be masked is detected within the second position area (2") (I1), whereby the reduction in the intensity (I2) of the light emitted into the signal light area (ALsl) compared to a state in which no traffic participant (4) to be hidden is detected within the signal light area (ALsl) (I1) is at least 30%.

2. Motor vehicle lighting system (1) according to one of the preceding claims, wherein the control means (2a) is designed as a current regulator (2a') for the light source (2b') responsible for emitting the signal light area (ALsl).

3. Motor vehicle lighting system (1) according to one of the preceding claims, wherein the control means (2a) is designed as a PWM dimmer assigned to the light source (2b') responsible for emitting the signal light area (ALsl).

4. Motor vehicle lighting system (1) according to claim 1, wherein the control means (2a) is designed as an adaptive light filter (2a") whose light transmission can be variably controlled and which is arranged, preferably exclusively, in the light path of that optical component (2b') which is intended for radiation into the signal light area (ALsl).

5. Motor vehicle lighting system (1) according to one of the preceding claims, wherein at least one light source (2b') is provided for each adaptive headlight (2), which is designed exclusively for radiation into the signal light area (ALsl).

6. Motor vehicle lighting system (1) according to one of the preceding claims, wherein a signal light device (2d) is provided for emitting light into the signal light area (ALsl), wherein the signal light device (2d) is preferably a daytime running light module, a parking light module, a position light module, a boundary light module, an ambient light module, and/or a design light module, wherein each signal light device is assigned a respective control means (2a).

7. Motor vehicle lighting system (1) according to one of the preceding claims, wherein all light sources and/or light modules of the motor vehicle lighting system (1) provided for emitting light, which are at least partially designed for emission into the signal light area (Als1), are assigned a control means (2a).

8. Motor vehicle (6) comprising a motor vehicle lighting system (1) according to one of the preceding claims.

## Revendications

1. Système d'éclairage pour véhicule automobile (1) comprenant
- au moins deux phares adaptatifs (2) pour véhicules automobiles, un phare adaptatif (2) pour véhicule automobile étant un phare qui est configuré pour générer une répartition des feux de croisement (AL) ainsi qu'une répartition adaptative des feux de route (FL) avec une résolution d'au moins deux, de préférence d'au moins sept segments (FLs1, FLs2, FLs13) pouvant être commandés individuellement, la répartition des feux de croisement (AL) présentant une zone attribuée à l'éclairage des panneaux de signalisation, appelée ci-après zone Signlight (ALsl), qui chevauche au moins partiellement une zone de rayonnement attribuée à la répartition des feux de route (FL),
- au moins un système de caméra (3) pour la détection de l'environnement du système d'éclairage du véhicule automobile (1) et pour la sortie de données d'environnement (D) correspondantes, le système de caméra (3) étant conçu pour la détection et la détermination de la position relative (Pos1, Pos2, Pos3) des usagers de la route (4', 4', 4") mesurée par rapport aux au moins deux phares adaptatifs de véhicule automobile (2),
- au moins une unité de commande (5) qui est reliée au système de caméra (3) pour recevoir les données d'environnement (D) ainsi qu'aux au moins deux phares adaptatifs (2) pour commander les phares adaptatifs (2), l'unité de commande (5) étant conçue pour comparer les données d'environnement (D) à une position relative (Pos) d'un usager de la route (4) avec une première zone de position (2') pouvant être éclairée par les segments (FLs1, FLs2, FLs13) de la répartition adaptative des feux de route (FL), et à déterminer les usagers de la route détectés (4', 4‴) qui se trouvent dans ladite zone de position éclairante (2") comme des usagers de la route à masquer (4', 4") et, en cas de présence d'usagers de la route à masquer (4), de désactiver en tout état de cause les segments commandables (FLs1, FLs2, FLs13) de la répartition des feux de route (FL) qui, sinon, éclaireraient directement l'usager de la route à masquer (4),
**caractérisé en ce que**
l'unité de commande (5) est en outre conçue pour, en présence d'un usager de la route (4', 4‴), de comparer sa position relative détectée (Pos) avec une deuxième zone de position (2"') pouvant être éclairée par la zone de signalisation lumineuse (ALsl) et d'en déduire ainsi la présence d'usagers de la route (4) à masquer à l'intérieur de la deuxième zone de position (2"), chaque projecteur adaptatif de véhicule automobile (2) étant en outre équipé d'un moyen de régulation (2a), chaque moyen de régulation (2a) étant conçu pour régler l'intensité de l'éclairage de la zone de signalisation (ALsl) par le phare adaptatif correspondant (2) diffère des intensités des zones restantes de la répartition des feux de croisement (AL), l'unité de commande (5) étant reliée à cet effet au moyen de régulation (2a) et le moyen de régulation (2a) étant commandé de telle sorte que, en cas de détection de la présence d'un usager de la route (4") à masquer dans la deuxième zone de position (2"), l'intensité de la lumière émise dans la zone de signalisation (ALsl) (I2) est également réduite par rapport à un état dans lequel aucun usager de la route (4) à masquer n'est détecté à l'intérieur de la deuxième zone de position (2"') (I1) la réduction de l'intensité (I2) de la lumière émise dans la zone du feu de signalisation (ALsl) par rapport à un état dans lequel aucun usager de la route (4) à masquer n'est détecté (I1) dans la zone du feu de signalisation (ALsl) est d'au moins 30 %.

2. Système d'éclairage pour véhicule automobile (1) selon l'une des revendications précédentes, dans lequel le moyen de régulation (2a) est conçu comme un régulateur de courant (2a') de la source lumineuse (2b') qui est responsable de l'émission de la zone de signalisation lumineuse (ALsl).

3. Système d'éclairage pour véhicule automobile (1) selon l'une des revendications précédentes, dans lequel le moyen de régulation (2a) est conçu sous la forme d'une gradation PWM qui est associée à la source lumineuse (2b') responsable de l'émission de la zone de signalisation lumineuse (ALsl).

4. Système d'éclairage pour véhicule automobile (1) selon la revendication 1, dans lequel le moyen de régulation (2a) est conçu comme un filtre de lumière adaptatif (2a‴) dont la transparence est réglable de manière variable, qui est disposé, de préférence exclusivement, dans le trajet lumineux du composant optique (2b") prévu pour l'émission dans la zone de signalisation (ALsl).

5. Système d'éclairage pour véhicule automobile (1) selon l'une des revendications précédentes, dans lequel au moins une source lumineuse (2b') est prévue pour chaque phare adaptatif (2), laquelle est exclusivement conçue pour émettre dans la zone de signalisation (ALsl).

6. Système d'éclairage pour véhicule automobile (1) selon l'une des revendications précédentes, dans lequel un dispositif d'éclairage de signalisation (2d) est prévu pour émettre dans la zone d'éclairage de signalisation (ALsl), le dispositif d'éclairage de signalisation (2d) étant de préférence un module d'éclairage diurne, un module d'éclairage de stationnement, un module d'éclairage de position, un module de feux de position, un module de feux d'ambiance et/ou un module de feux décoratifs, chaque dispositif d'éclairage de signalisation étant associé à un moyen de régulation (2a).

7. Système d'éclairage pour véhicule automobile (1) selon l'une des revendications précédentes, dans lequel un moyen de commande (2a) est associé à toutes les sources lumineuses et/ou modules d'éclairage du système d'éclairage pour véhicule automobile (1) prévus pour émettre de la lumière, qui sont au moins partiellement conçus pour émettre dans la zone de signalisation (Als1).

8. Véhicule automobile (6) comprenant un système d'éclairage pour véhicule automobile (1) selon l'une des revendications précédentes.
